# EUROPÄISCHE PATENTSCHRIFT

(11) **EP 1 045 153 B1**
(45) Veröffentlichungstag und Bekanntmachung des Hinweises auf die Patenterteilung: **15.10.2003**
(21) Anmeldenummer: 00106802.2
(22) Anmeldetag: 30.03.2000
(51) Int. Cl.: F16B 37/04, F16B 21/20

(54) **Befestigungselement für Blechteile**
Fastening element for metal sheets
Dispositif de fixation de tôles

(30) Priorität: 14.04.1999 DE 19916809
(43) Veröffentlichungstag der Anmeldung: 18.10.2000
(73) Patentinhaber: Carcoustics (Liechtenstein) AG, 9493 Mauren (LI)
(72) Erfinder: Pirchl, Gerhard, 5708 Birrwil (CH)
(74) Vertreter: Riebling, Peter, Dr.-Ing.

(56) Entgegenhaltungen:
- EP-A- 0 886 074
- DE-A- 19 607 000
- FR-A- 2 064 487
- FR-A- 2 308 822
- FR-A- 2 766 864

## Beschreibung

Die Erfindung betrifft ein Befestigungselement für Blechteile zur Befestigung der Blechteile an einem Körper, insbesondere einer Karosseriewand, Gehäusen oder Gerätewänden nach dem Oberbegriff des Patentanspruches 1.

Befestigungselemente dieser Art werden in großer Zahl insbesondere im Fahrzeugbau eingesetzt. Es handelt sich um ein Schnellmontageelement, mit dem auf einfache Weise ein Blechteil auf einer Körperoberfläche festgelegt werden kann. Auf der Körperoberfläche z. B. auf einem Karosserieblech, ist dafür ein Montagedorn befestigt, der etwa senkrecht zur Körperoberfläche absteht, wobei das Montageelement mit den zu befestigenden Blechteil fest verbunden ist und mit dem Montagedorn zusammenwirkt.

Aus der DE 196 07 00 A1 ist eine Montagescheibe mit Federwirkung bekannt, welche aus einer am Blechteil befestigten Bodenscheibe und einer mit der Bodenscheiben einstückig befestigten Federscheibe besteht, die Federlappen aufweist, welche mit Rastwirkung an einem Montagedorn festgelegt werden können. Diese Montagescheibe dient zur Befestigung zweier aneinanderliegenden Teile. Die DE-GM 19 36 757 zeigt eine Zapfenklemme zur Befestigung von mit Zapfen versehenen Teilen an Blechwänden, die mittels federnden Zungen eine Klemmverbindung mit dem Zapfen eingeht. Die Zapfenklemme selbst wird in eine Öffnung des Blechteils eingesteckt und durch Klemmwirkung gehalten. Die hier beschriebene Zapfenklemme weist den Nachteil auf, daß keine feste Verbindung zwischen Klemme und Blechteil besteht. Dadurch kann es aufgrund von Vibrationen zu Klappergeräuschen kommen bishin zum vollständigen Lösen der Klemmverbindung.

Befestigungselemente gemäß den Merkmalen des Oberbegriffs des Patentanspruchs 1 sind aus den Schriften FR-A-2 766 864 und FR-A-2 064 487 bekannt.

Der vorliegenden Erfindung liegt die Aufgabe zugrunde, ein Befestigungselement zu schaffen, das unempfindlich ist gegen Vibrationen und eine sichere und haltbare, einfach zu montierende Befestigung von Blechteilen erlaubt.

Diese Aufgabe wird erfindungsgemäß durch die kennzeichnenden Merkmale des Patentanspruches 1 gelöst.

Das Wesen der Erfindung besteht darin, daß das Befestigungselement aus einem mit dem Blechteil verbindbaren Einsatz besteht, in welchem eine Federscheibe integriert ist.

In der erfindungsgemäßen Ausbildung besteht der Einsatz aus einer Scheibe mit einer zentralen Bohrung, welche an einer Seite einen etwa senkrecht zur Scheibenebene gerichteten, umlaufenden ersten Bördelrand aufweist, wobei sich an die Scheibe ein radial nach außen weisender Ringansatz anschließt, der am äußeren Rand einen zweiten, etwa senkrecht und entgegengesetzt zum ersten Bördelrand gerichteten zweiten Bördelrand aufweist.

Der Einsatz ist in eine dem Außendurchmesser des ersten Bördelrandes entsprechende Öffnung im Blechteil einsetzbar und durch Umbördelung des ersten Bördelrandes in dem Blechteil festlegbar.

Vorzugsweise besteht der Einsatz aus einem Preßteil aus Aluminium oder einer Aluminiumlegierung, kann jedoch aus anderen geeigneten Materialien bestehen. Insbesondere ist zur Vermeidung von Korrosion vorgesehen, den Einsatz aus dem gleichen Material zu fertigen, aus dem das Blechteil besteht.

Die im Einsatz integrierte Federscheibe besteht in einer bevorzugten Ausbildung aus einem zentralen Ringabschnitt, an dessen Innendurchmesser mehrere Federzungen angeordnet sind, die eine Einstecköffnung für den Montagedorn definieren. Am Außendurchmesser des Ringabschnittes sind etwa Π-förmig ausgebildete, federnde Stützsegmente angeordnet, die im Einsatz gehalten werden.

Die Federscheibe wird in eine durch den zweiten Bördelrand gebildete Aufnahme des Einsatzes eingesetzt und durch Umbördelung dieses Bördelrandes mit Spiel im Einsatz gehalten. Die schräg nach außen in Richtung Bördelrand gerichteten Stützsegmente weisen dazu vorzugsweise am äußeren Ende einen flachen Auflagebereich auf, der in den Bördelrand des Aufsatzes gehalten wird.

Die Federzungen, die schräg nach innen in Richtung des einzusetzenden Montagedorns gerichtet sind, legen sich beim Aufstecken des Befestigungselementes auf den Montagedorn unter Federwirkung an den Montagedorn an.

Vorzugsweise besteht die Federscheibe aus Cr-Ni-Stahl oder einer Aluminiumlegierung.

Im folgenden wird die Erfindung anhand von lediglich einen Ausführungsweg darstellenden Zeichnungen näher erläutert. Hierbei gehen aus den Zeichnungen und ihrer Beschreibung weitere wesentliche Merkmale und Vorteile der Neuerung hervor.

Es zeigen:
- Figur 1:: einen Querschnitt durch das Befestigungselement im nicht zusammengebauten Zustand, d. h. Einsatz und Federscheibe sind noch nicht miteinander verbunden;
- Figur 2:: einen Querschnitt durch das Befestigungselement im fertigen, einsatzfähigen Zustand;
- Figur 3:: einen vergrößerten Querschnitt des Verbindungsbereiches zwischen Einsatz und Federscheibe;
- Figur 4:: eine Draufsicht auf das Befestigungselement;
- Figur 5:: das in ein Blechteil eingesetzte Befestigungselement vor der Montage auf einen Montagedorn.

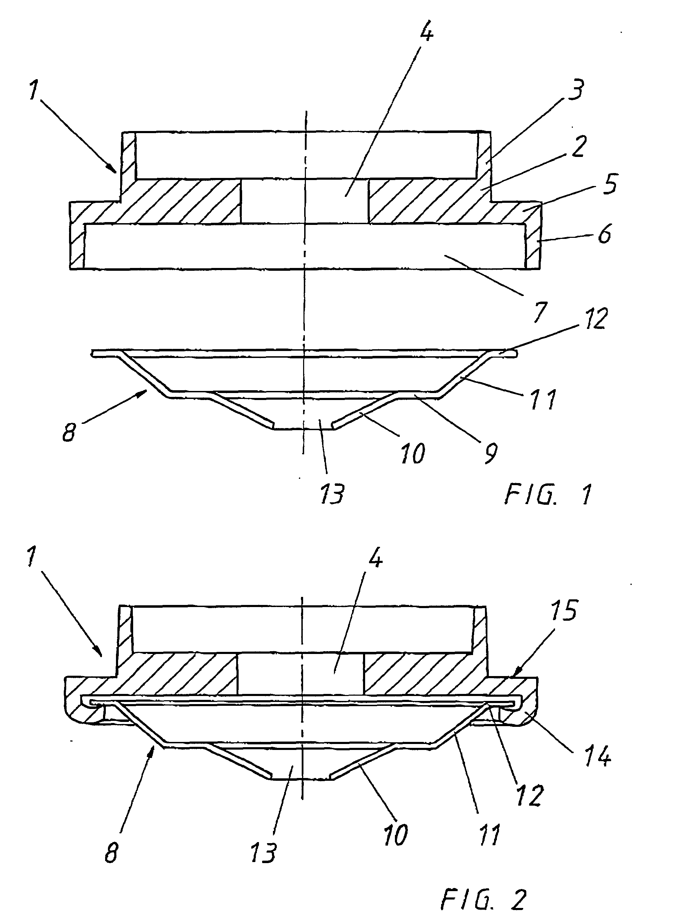

Figur 1 zeigt eine Darstellung der beiden Komponenten des Befestigungselementes vor dem eigentlichen Zusammenbau. Das Befestigungselement besteht aus einem Einsatz 1, welcher eine Scheibe 2 mit einer zentralen Bohrung 4 umfaßt. An einer Seitenfläche der Scheibe 2 ist ein etwa senkrecht zur Scheibenebene gerichteter, umlaufender erster Bördelrand 4 angeordnet. Am Außenumfang der Scheibe 2 schließt ein radial nach außen weisender Ringansatz 5 an, der am äußeren Ende einen zweiten, etwa senkrecht und entgegengesetzt zum ersten Bördelrand 3 gerichteten zweiten Bördelrand 6 aufweist.

Der Einsatz 1 wird also im wesentlichen gebildet durch zwei Zylinderstümpfe, wobei der erste Zylinderstumpf geringeren Durchmessers durch die Scheibe 2 und den ersten Bördelrand 3 definiert wird, und der zweite Zylinderstumpf größeren Durchmessers durch die Scheibe 2 und den zweiten Bördelrand 6, wobei sich eine Aufnahme 7 ausbildet, in welche die Federscheibe 8 eingesetzt wird.

Die Federscheibe 8 besteht aus einem etwa haubenförmigen, federnden Blechteil, welches einen mittleren Ringabschnitt 9 aufweist, an dessen Innendurchmesser mehrere Federzungen 10 angeordnet sind, welche sich schräg nach innen in Richtung einer Öffnung 13 erstrecken, in welche der Montagedorn eingeführt wird. Am Außendurchmessers des Ringabschnittes 9 sind mehrere etwa Π förmige, federnde Stützsegmente 11 angeordnet, die sich bei in den Einsatz 1 eingesetzter Federscheibe schräg nach außen in Richtung des zweiten Bördelrandes 6 erstrecken und in flachen Auflagebereichen enden.

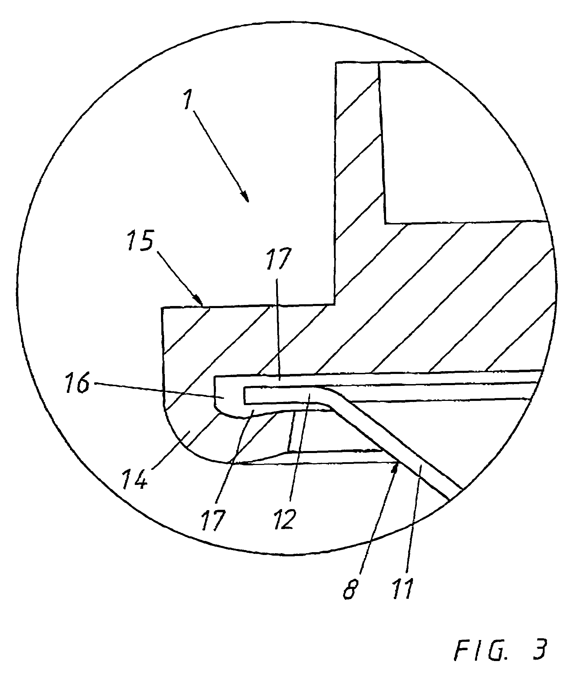

Figur 2 zeigt nun das fertige Befestigungselement, sowie es zur Befestigung des Blechteiles eingesetzt ist. Hierbei ist die Federscheibe 8 in die Aufnahme 7 des Einsatzes 1 eingesetzt und durch eine Umbördelung 14, die durch Umbördeln des zweiten Bördelrandes 6 gebildet wird, in dem Einsatz unlösbar befestigt. Dabei fluchtet die durch die Federzungen gebildete Öffnung 13 mit der Bohrung 4 des Einsatzes 1, wobei in diese gemeinsam gebildete Öffnung 13 der Montagedorn eingeführt, wie weiter unten noch näher beschrieben ist.

Wesentlich ist, daß die Federscheibe 8 durch Umbördelung 14 ihrer sich am äußeren Rand befindlichen Auflagebereiche 12 im Einsatz 1 gehalten ist. Dabei ist es ferner wichtig, daß die Federscheibe nicht starr im Einsatz 1 gehalten ist, sondern eine gewisses Spiel hat, um die unvermeidbaren Toleranzen bei der Fertigung von Karosserieteilen und der Positionierung der Montagedome ausgleichen zu können. Dies betrifft insbesondere Maßabweichungen der Montagedome, besonders auch hinsichtlich ihres Abstandes voneinander oder schief zum Träger stehende Montagedome.

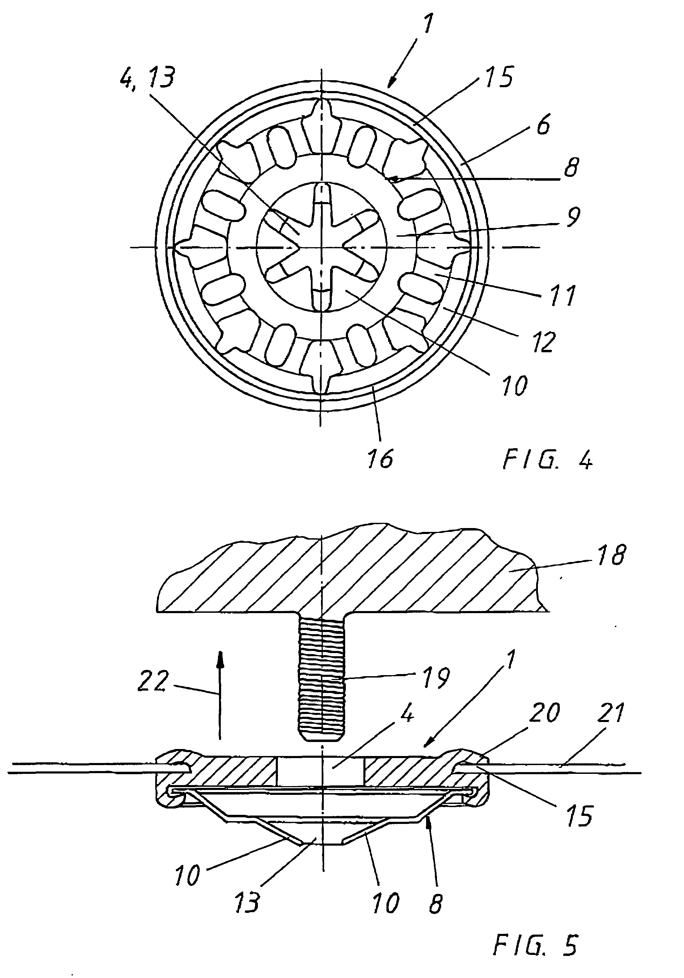

Die Aufnahme der Auflagebereiche 12 in der Umbördelung 14 ist in Figur 3 vergrößert dargestellt. Man erkennt den Einsatz 1, in welchen die Federscheibe 8 mittels ihrer Auflagebereiche 12 eingesetzt ist. Durch die Umbördelung 14 werden die Auflagebereiche 12 in der Federscheibe 8 des Einsatzes 1 gehalten, wobei die Auflagebereiche 12 durch die Umbördelung 14 nicht eingeklemmt werden, sondern Freiräume 16, 17 seitlich, oberhalb bzw. unterhalb des Auflagebereiches 12 vorgesehen sind, so daß die Federscheibe 8 sicher aber unter gewissem Spiel im Einsatz 1 gehalten ist.

Figur 4 zeigt eine Draufsicht auf das Befestigungselement. Man erkennt deutlich die Federscheibe 8, die in den Einsatz 1 eingelegt ist, wobei der Bördelrand 6 noch nicht umgebördelt ist. Die Federscheibe 8 umfaßt einen mittleren Ringabschnitt 9; von welchem aus sich zum Zentrum hin die Federzungen 10 erstrecken, wobei die zentrale Öffnung 13 verbleibt. Nach außen hin schließen sich Stützsegmente 11 an den mittleren Ringabschnitt 9 an, welche Stützsegmente im wesentlichen Π förmige Ausbildung haben, und in einem flachen Auflagebereich 12 zur Auflage auf dem Einsatz 1 enden. Die Aufnahme 7 des Einsatzes 1 ist im Durchmesser einige Millimeter größer als der Durchmesser der Federscheibe 8, so daß ein Freiraum 16 verbleibt, der eine Beweglichkeit der Federscheibe 8 im Einsatz 1 sicherstellt.

Figur 5 schließlich zeigt ein Blechteil 21, welches eine Öffnung aufweist, in welche das Befestigungselement eingesetzt ist. Die Öffnung im Blechteil 21 muß dabei etwas größer ausgebildet sein, als der Durchmesser des ersten Bördelrandes 3, wird, wobei dieser Bördelrand 3 durch die Öffnung im Blechteil 21 hindurch gesteckt wird, so daß der Einsatz 1 mit seiner Auflagefläche 15 (vergl. Figur 2) auf dem Blechteil 21 zu liegen kommt. Daraufhin wird der Bördelrand 3 umgebördelt, so daß sich eine Umbördelung 20 ergibt und das Blechteil zwischen der Auflagefläche 15 und der Umbördelung 20 gehalten wird. Das Befestigungselement ist nun mit dem Blechteil 21 verbunden, und das Blechteil 21 kann an dem vorgesehenen Körper, z. B. einem Karosserieteil 18, befestigt werden. Hierzu weist das Karosserieteil 18 einen Montagedorn 19 auf, dessen Durchmesser etwas größer ist, als die durch die Federzungen 10 gebildete Öffnung 13. Die Bohrung 4 im Einsatz 1 hingegen ist zu Ausgleich von Toleranzen wesentlich größer als der Durchmesser des Montagedorns 19.

Das Blechteil 21 mit dem Befestigungselement wird nun in Pfeilrichtung 22 auf den Montagedorn 19 gesteckt, wobei der Montagedom 19 durch die Bohrung 4 und durch die Öffnung 13 hindurchgeführt wird, so daß sich die Federzungen 10 an der Außenfläche des Montagedorns 19, welche bevorzugt eine Rippung aufweisen kann, federnd anlegen.

Die Federzungen 10 sowie die gesamte Federscheibe 8 federt in sich, so daß durch festes Anpressen des Befestigungselementes auf über den Montagedorn 19 das Befestigungselement mit dem entsprechenden Blechteil 21 unter Vorspannung am Karosserieteil 18 gehalten wird.

Dadurch, daß das Befestigungselement fest im Blechteil 21 gehalten ist und unter Vorspannung auf den Montageteil 19 aufgeschoben wird, ist diese erfindungsgemäße Anordnung sehr unempfindlich gegenüber Vibrationen und Erschütterungen, so daß sich die Verbindung zwischen Befestigungselement und Montagedorn 19 nicht mehr löst. Dadurch entsteht auch kein Bewegungsspielraum für das Blechteil 21, so daß Klappergeräuschen vorgebeugt wird.

### Zeichnungslegende

- 1: Einsatz
- 2: Scheibe
- 3: Bördelrand
- 4: Bohrung
- 5: Ringansatz
- 6: Bördelrand
- 7: Aufnahme
- 8: Federscheibe
- 9: Ringabschnitt
- 10: Federzungen
- 11: Stützsegment
- 12: Auflagebereich
- 13: Öffnung
- 14: Umbördelung
- 15: Auflagefläche
- 16: Freiraum
- 17: Freiraum
- 18: Karosserieteil
- 19: Montagedorn
- 20: Umbördelung
- 21: Blechteil
- 22: Pfeilrichtung

## Patentansprüche

1. Befestigungselement zur Befestigung eines Blechteils (21) an einem Körper (18), insbesondere einem Karosserieteil, wobei das Befestigungselement an oder in dem Blechteil angeordnet ist, und der Körper einen Montagedorn (19) aufweist, der mit dem Befestigungselement zusammenwirkt, wobei das Befestigungselement aus einem mit dem Blechteil (21) verbindbaren Einsatz (1) besteht, in welchem eine Federscheibe (8) integriert ist,
**dadurch gekennzeichnet, daß** der Einsatz (1) aus einer Scheibe (2) mit einer zentralen Bohrung (4) besteht, welche an einer Seite einen etwa senkrecht zur Scheibenebene gerichteten umlaufenden ersten Bördelrand (3) aufweist, wobei sich an die Scheibe (2) ein radial nach Außen weisender Ringansatz (5) anschließt, der am äußeren Rand einen etwa senkrecht und entgegengesetzt zum ersten Bördelrand (3) gerichteten zweiten Bördelrand (6) aufweist.

2. Befestigungselement nach Anspruch 1, **dadurch gekennzeichnet, daß** der Einsatz (1 ) in eine dem Außendurchmesser des ersten Bördelrandes (3) entsprechende Öffnung im Blechteil (21) einsetzbar und durch Umbördelung (20) des ersten Bördelrandes (3) in dem Blechteil festlegbar ist.

3. Befestigungselement nach einem der Ansprüche 1 oder 2, **dadurch gekennzeichnet, daß** der Einsatz (1) aus einem Preßteil aus Aluminium oder einer Aluminiumlegierung besteht.

4. Befestigungselement nach einem der Ansprüche 1 bis 3, **dadurch gekennzeichnet, daß** die Federscheibe (8) aus einem zentralen Ringabschnitt (9) besteht, an dessen Innendurchmesser mehrere Federzungen (10) angeordnet sind, die eine Einstecköffnung (13) für den Montagedorn (19) definieren, und am Außendurchmesser des Ringabschnitts (9) etwa Π -förmig ausgebildete federnde Stützsegmente (11) angeordnet sind, die im Einsatz (1) gehalten werden.

5. Befestigungselement nach einem der Ansprüche 1 bis 4, **dadurch gekennzeichnet, daß** die Federscheibe (8) in eine durch den Bördelrand (6) gebildete Aufnahme (7) des Einsatzes (1) eingesetzt und durch Umbördelung (14) des zweiten Bördelrandes (6) mit Spiel gehalten ist.

6. Befestigungselement nach einem der Ansprüche 1 bis 5, **dadurch gekennzeichnet, daß** die Stützsegmente (11) schräg nach außen in Richtung des zweiten Bördelrand (6) gerichtet sind und am äußeren Ende einen flachen Auflagebereich (12) aufweisen.

7. Befestigungselement nach einem der Ansprüche 1 bis 6, **dadurch gekennzeichnet, daß** die Federzungen (10) schräg nach innen in Richtung des einzusetzenden Montagedorns (19) gerichtet sind.

8. Befestigungselement nach einem der Ansprüche 1 bis 7, **dadurch gekennzeichnet, daß** sich die Federzungen (10) unter Federwirkung an den Montagedorn (19) anlegen.

9. Befestigungselement nach einem der Ansprüche 1 bis 8, **dadurch gekennzeichnet, daß** die Federscheibe (8) aus Cr-Ni-Stahl oder einer Aluminiumlegierung besteht.

10. Befestigungselement nach einem der Ansprüche 1 bis 9, **dadurch gekennzeichnet, daß** die Federscheibe (8) etwa haubenförmig geformt ist.

## Claims

1. Fastening element for fastening a sheet metal part (21) to a body (18), in particular a vehicle body part, the fastening element being arranged on or in the sheet metal part, and the body having an assembly mandrel (19) cooperating with the fastening element, the fastening element consisting of an insert (1) which can be connected to the sheet metal part (21), in which insert (1) a spring washer (8) is integrated, **characterised in that** the insert (1) consists of a disc (2) with a central hole (4) which on one side has a peripheral first flanged edge (3) directed approximately perpendicularly to the disc plane, an annular shoulder (5) pointing radially outwardly being adjacent to the disc (2), the shoulder (5) having at the outer edge a second flanged edge (6) being directed approximately perpendicularly and in the opposite direction to the first flanged edge (3).

2. Fastening element according to claim 1, **characterised in that** the insert (1) can be inserted into an aperture in the sheet metal part (21) corresponding to the external diameter of the first flanged edge (3) and can be fixed in the sheet metal part by crimping (20) the first flanged edge (3).

3. Fastening element according to either of claims 1 or 2, **characterised in that** the insert (1) consists of a pressed part made of aluminium or an aluminium alloy.

4. Fastening element according to any one of claims 1 to 3, **characterised in that** the spring washer (8) consists of a central annular portion (9), on the internal diameter of which are arranged a plurality of spring tongues (10) which define an insertion aperture (13) for the assembly mandrel (19), and arranged on the external diameter of the annular portion (9) are approximately Π-shaped resilient support segments (11) which are held in the insert (1).

5. Fastening element according to any one of claims 1 to 4, **characterised in that** the spring washer (8) is inserted in a receiver (7) of the insert (1) formed by the flanged edge (6) and is held with play by crimping (14) the second flanged edge (6).

6. Fastening element according to any one of claims 1 to 5, **characterised in that** the support segments (11) are directed obliquely outwardly in the direction of the second flanged edge (6) and at the outer end have a flat supporting region (12).

7. Fastening element according to any one of claims 1 to 6, **characterised in that** the spring tongues (10) are directed obliquely inwardly in the direction of the assembly mandrel (19) to be inserted.

8. Fastening element according to any one of claims 1 to 7, **characterised in that** the spring tongues (10) rest on the assembly mandrel (19) with spring action.

9. Fastening element according to any one of claims 1 to 8, **characterised in that** the spring washer (8) consists of Cr-Ni steel or an aluminium alloy.

10. Fastening element according to any one of claims 1 to 9, **characterised in that** the spring washer (8) is approximately bonnet-shaped.

## Revendications

1. Elément de fixation pour fixer une pièce en tôle (21) à un corps (18), en particulier à un élément de carrosserie, l'élément de fixation étant disposé sur ou dans la pièce en tôle et le corps comportant un mandrin de montage (19) qui coopère avec l'élément de fixation, et l'élément de fixation se composant d'un insert (1) qui est apte à être relié à la pièce en tôle (21) et dans lequel est intégrée une rondelle élastique (8),
**caractérisé en ce que** l'insert (1) se compose d'un disque (2) qui présente un perçage central (4) et, sur un côté, un premier bord de rabattement (3) périphérique à peu près perpendiculaire au plan du disque, un épaulement annulaire (5) dirigé radialement vers l'extérieur faisant suite au disque (2) et présentant sur le bord extérieur un second bord de rabattement (6) à peu près perpendiculaire et opposé au premier bord de rabattement (3).

2. Elément de fixation selon la revendication 1, **caractérisé en ce que** l'insert (1) est apte à être placé dans une ouverture de la pièce en tôle (21) correspondant au diamètre extérieur du premier bord de rabattement (3), et à être bloqué dans ladite pièce en tôle grâce au rabattement (20) du premier bord de rabattement (3).

3. Elément de fixation selon la revendication 1 ou 2, **caractérisé en ce que** l'insert (1) se compose d'une pièce moulée par compression en aluminium ou en alliage d'aluminium.

4. Elément de fixation selon l'une des revendications 1 à 3, **caractérisé en ce que** la rondelle élastique (8) se compose d'une section annulaire centrale (9) sur le diamètre intérieur de laquelle sont disposées plusieurs languettes élastiques (10) qui définissent une ouverture d'introduction (13) pour le mandrin de montage (19), et des segments d'appui élastiques (11) à peu près en forme de Π qui sont fixés dans la pièce intercalaire (1) sont disposés sur le diamètre extérieur de ladite section annulaire (9).

5. Elément de fixation selon l'une des revendications 1 à 4, **caractérisé en ce que** la rondelle élastique (8) est placée dans un logement (7) de la pièce intercalaire (1) qui est défini par le bord de rabattement (6), et est retenue avec du jeu grâce au rabattement (14) du second bord de rabattement (6).

6. Elément de fixation selon l'une des revendications 1 à 5, **caractérisé en ce que** les segments d'appui (11) sont inclinés vers l'extérieur, en direction du second bord de rabattement (6), et présentent à leur extrémité extérieure une zone d'appui plate (12).

7. Elément de fixation selon l'une des revendications 1 à 6, **caractérisé en ce que** les languettes (10) sont inclinées vers l'intérieur, en direction du mandrin de montage (19) à insérer.

8. Elément de fixation selon l'une des revendications 1 à 7, **caractérisé en ce que** les languettes élastiques (10) s'appliquent par élasticité contre le mandrin de montage (19).

9. Elément de fixation selon l'une des revendications 1 à 8, **caractérisé en ce que** la rondelle élastique (8) se compose d'acier Cr-Ni ou d'un alliage d'aluminium.

10. Elément de fixation selon l'une des revendications 1 à 9, **caractérisé en ce que** la rondelle élastique (8) a à peu près la forme d'une calotte.
